# EUROPEAN PATENT SPECIFICATION

(11) **EP 2 348 517 B1**
(45) Date of publication and mention of the grant of the patent: **27.09.2017**
(21) Application number: 11151541.7
(22) Date of filing: 08.01.2008
(51) Int. Cl.: H01F 27/28, H01F 38/14, H01F 27/40

(54) **Noncontact power-transmission coil, portable terminal, and terminal charging device**
Kontaktlose Leistungsübertragungsspule, tragbares Endgerät und Endgerätladevorrichtung
Bobine de transmission de puissance sans contact, terminal portable et dispositif de chargement de terminal

(30) Priority: 09.01.2007 JP 2007001634
(43) Date of publication of application: 27.07.2011
(62) Divisional of application: 08250075.2
(73) Proprietor: Sony Mobile Communications, Inc., Minato-ku Tokyo 108-0075 (JP); Seiko Epson Corporation, Tokyo 163-0811 (JP)
(72) Inventor: Kato, Hiroshi, Minato-ku Tokyo 108-0075 (JP); Suzuki, Kuniharu, Minato-ku Tokyo 108-0075 (JP); Suzuki, Katsuya, Minato-ku Tokyo 108-0075 (JP); Yamazaki, Manabu, Minato-ku Tokyo 108-0075 (JP); Kondo, Yoichiro, Shinjuku-ku, Tokyo 163-0811 (JP); Onishi, Kota, Shinjuku-ku, Tokyo 163-0811 (JP); Yoda, Kentaro, Shinjuku-ku, Tokyo 163-0811 (JP); Jin, Mikimoto, Shinjuku-ku, Tokyo 163-0811 (JP); Kamijo, Takahiro, Shinjuku-ku, Tokyo 163-0811 (JP); Sogabe, Haruhiko, Shinjuku-ku, Tokyo 163-0811 (JP)
(74) Representative: D Young & Co LLP

(56) References cited:
- EP-A1- 0 547 563
- WO-A1-00/54292
- DD-A5- 290 738
- DE-U1- 29 803 750
- GB-A- 2 083 952
- JP-A- 2006 042 519

## Description

This invention relates to a noncontact power-transmission coil, a portable terminal and a terminal charging device.

In the past, systems have been known in which charging power to charge a rechargeable battery incorporated within a portable terminal, for example, has been transmitted by electromagnetic induction using a noncontact power-transmission coil.

In addition, Japanese Patent Application Publication No. 2006-42519 (FIG. 2 and FIG. 3) discloses a planar coil as a noncontact power-transmission coil mounted on a portable terminal desired to be thin, such as a mobile phone unit. In this case, the planar coil is constructed such that an electric wire is formed of a single or twisted wire. The surface of the wire is provided with an insulating layer. In addition, the wire is spirally wound in a substantially same plane. Furthermore, this Patent Document also discloses that the formation of a magnetic sheet. That is, a planer coil on the power-transmitting side and a planar coil on the power-receiving side are arranged facing to each other. Then, the counter surface of each coil, which is opposite to the surface facing to the other coil, is entirely covered with a magnetic sheet to prevent undesired radiation with the magnetic field generated from both coils.

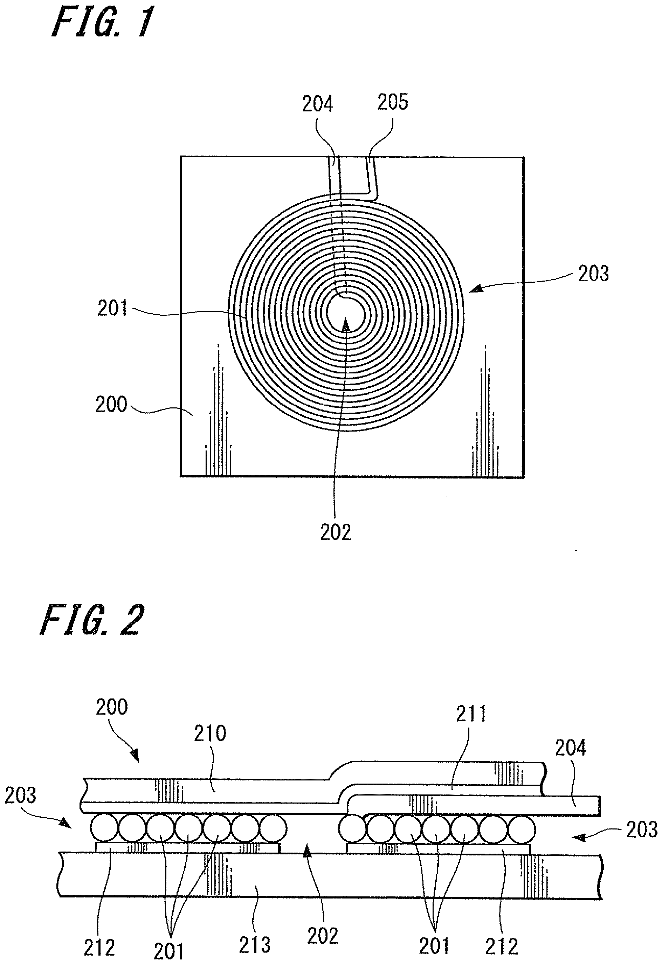

FIG. 1 and FIG. 2 illustrate the schematic configuration of a noncontact power-transmission coil 200 including a spirally-wound planar coil according to related art.

As shown in FIG. 1, the spiral planar coil is constructed of a spirally-wound electric wire 201 made of a single or twisted wire in a substantially same plane. An electric wire end (for example, the electric wire end on the winding-end side) 205 on an outer periphery 203 of the planar coil is directly drawn to the outside. On the other hand, an electric wire end (the electric wire end on the winding-start end) 204 on an inner periphery 202 is passed over (or under) a spirally-wound electric wire portion and then drawn to the outside. Furthermore, as shown in FIG. 2, a magnetic sheet 210 is attached on one planar portion of the planar coil of the noncontact power-transmission coil 200 through an adhesion sheet 211. The other planar portion is attached on the internal surface or the like of a terminal housing 213 through an adhesion sheet 211 or the like if required. Although not shown in the figure, a metal sheet, of aluminum or the like, is attached on the outer side of the magnetic sheet 210.

Recently, furthermore, mobile phone units and so on which are thinner than ever may have been demanded in the art. Therefore, a reduction in thickness of the noncontact power-transmission coil constructed of the above spiral planer coil has also been requested in addition to attain a reduction in thickness of any of various electronic parts arranged in the housing of such unit.

However, when the spiral planar coil in the related art as illustrated in FIG. 1 and FIG. 2 is mounted on a mobile phone unit or the like, the electric wire end 204 of the inner periphery 202 of the planar coil is passed over (or under) the electrical wire portion wound into the spiral shape and then drawn to the outside. Thus, the portions of an electric wire having a certain thickness may be overlapped one another. In other words, the overlapped portion of the electric wire may have a large increase in the thickness of the planar coil, thereby preventing the mobile phone unit from further thinning.

It is desirable to provide a noncontact power-transmission coil formed of a spiral planar coil capable of further being thin in shape, and a portable terminal and a terminal charging device each incorporating the noncontact power-transmission coil.

A prior art laminated stack of coils having magnetic layers is described in GB 2083952A.

According to an embodiment of the present invention, there is provided a noncontact power-transmission coil according to Claim 1.

Another embodiment of the present invention is a portable terminal including the above-described noncontact power-transmission coil.

A further embodiment of the present invention is a terminal charging device including the above-described noncontact power-transmission coil.

Preferablly, the invention relates to a noncontact power transmission coil for use in power transmission in a noncontact manner using electromagnetic induction, when charging a rechargeable battery incorporated in a small-size, thin portable terminal such as a mobile phone unit. The invention further preferably, relates to a portable terminal and a terminal charging device incorporating such noncontact power-transmission coil.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a schematic front view of a planer coil according to a related art, in which an electric wire end of the inner periphery of a spirally-wound electric wire is drawn to the outside by passing the electric wire over or under a spirally-wound electric wire portion.
FIG. 2 is a schematic cross-sectional view of the planner coil shown in FIG. 1.
FIG. 3 is a diagram showing a schematic inner structure of a principal part of a mobile phone unit and a cradle according to an embodiment forming part of the present invention.
FIG. 4 is a schematic front view of a noncontact power-transmission coil in which a planar coil formed of a spirally-wound electric wire is stuck on a flexible printed-circuit board.
FIG. 5 is a schematic front view of the noncontact power-transmission coil in which the planar coil shown in FIG. 4 is not stuck on the flexible printed-circuit board.
FIG. 6 is a schematic cross-sectional view of the noncontact power-transmission coil shown in FIG. 4.
FIG. 7 is a schematic front view of a noncontact power-transmission coil forming part of the invention having a multi-layered flexible printed-circuit board in which a planar coil pattern formed of a spirally-formed conductor pattern is formed on top of the other.
FIG. 8 is a schematic perspective view of the multi-layered flexible printed-circuit board shown in FIG. 7, where the respective layers are separated from each other.
FIG. 9 is a schematic cross-sectional view of a noncontact power-transmission coil having the multi-layered flexible printed-circuit board shown in FIG. 7.
FIG. 10 is a partly-enlarged view of the noncontact power-transmission coil having the multi-layered flexible printed-circuit board shown in FIG. 9.
FIG. 11 is a schematic cross sectional view of a near-coil portion when the noncontact power-transmission coil of the mobile phone unit and the noncontact power-transmission coil of the cradle are arranged in proximity to each other, where a magnetic sheet is stuck on each of them so that the flat surface of a planar coil formed of a spirally-wound electric wire is entirely covered with the magnetic sheet.
FIG. 12 is an enlarged view of a part of FIG. 11, where the flow of a magnetic flux formed by both coils is illustrated.
FIG. 13 is a schematic cross sectional view of a near-coil portion when the noncontact power-transmission coil of the mobile phone unit and the noncontact power-transmission coil of the cradle are arranged in proximity to each other, where a magnetic sheet is stuck on each of them so that the magnetic sheet is only placed on the flat surface of a planar coil formed of a spirally-wound electric wire.
FIG. 14 is an enlarged view of a part of FIG. 12, where the flow of a magnetic flux formed by both the coils is illustrated;
FIG. 15 is a schematic cross sectional view of a near-coil portion when the noncontact power-transmission coil of the mobile phone unit and the noncontact power-transmission coil of the cradle are arranged in proximity to each other, where a magnetic sheet is stuck on each of them so that both the flat surface and the side portion of a planar coil formed of a spirally-wound electric wire is entirely covered with the magnetic sheet.
FIG. 16 is an enlarged view of a part of FIG. 15, where the flow of a magnetic flux formed by both the coils is illustrated.
FIG. 17 is a schematic front view of a noncontact power-transmission coil having a flexible printed-circuit board with the shape substantially fit to a planar coil formed of a spirally-wound electric wire.
FIG. 18 is a schematic front view of the noncontact power-transmission coil in which the planar coil shown in FIG. 17 is not stuck on the flexible printed-circuit board.
FIG. 19 is a schematic cross-sectional view of the noncontact power-transmission coil, where a magnetic layer is formed on both the flat surface and an outer periphery side portion of the planer coil shown in FIG. 17.
FIG. 20 is a partly-enlarged view of the noncontact power-transmission coil shown in FIG. 17.
FIG. 21 is a schematic front view of a noncontact power-transmission coil forming part of the present invention having a multi-layered flexible printed-circuit board with the shape substantially fit to a planar coil pattern made of a spirally-formed conductor pattern.
FIG. 22 is a schematic cross-sectional view of the noncontact power-transmission coil, where a magnetic layer is formed on both the flat surface and an outer periphery side portion of the planer coil of the multi-layered flexible printed-circuit board shown in FIG. 21.
FIG. 23 is a partly-enlarged view of the noncontact power-transmission coil shown in FIG. 22.
FIG. 24 is a schematic cross sectional view of a noncontact power-transmission coil forming part of the present invention, where a magnetic layer is formed up to the part of a hole opened in the planar coil inner periphery portion of a multi-layered flexible printed-circuit
   board with the shape substantially fit to a planar coil pattern made of a spirally-formed conductor patter.
FIG. 25 is a partly-enlarged view of the noncontact power-transmission coil shown in FIG. 24.
FIG. 26 is a schematic cross-sectional view of a noncontact power-transmission coil as an example, where a temperature-detecting element layer is formed in a flexible printed-circuit board of a noncontact power-transmission coil on which a magnetic layer is formed on both the flat surface and the outer periphery side portion of a planar coil formed of a spirally-wound electric wire.
FIG. 27 is a schematic front view of the flexible printed-circuit board having the temperature-detecting element layer shown in FIG. 26 in which the planar coil is not stuck on the flexible printed-circuit board.

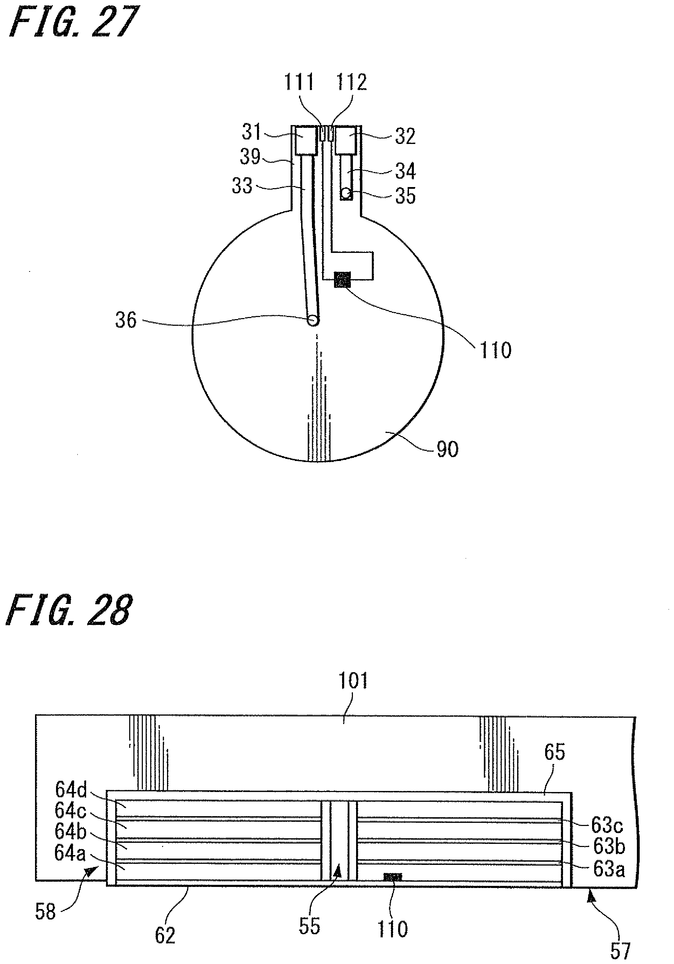

FIG. 28 is a schematic cross-sectional view of a noncontact power-transmission coil as an example forming part of the invention, where a temperature-detecting element layer is formed in a flexible printed-circuit board of a noncontact power-transmission coil on which a magnetic layer is formed on both the flat surface and the outer periphery side portion of a planar coil formed of a spirally-wound conductor pattern. In this embodiment, a mobile phone unit is provided as an example of a portable terminal. In this case, a noncontact power-transmission coil with a spiral planar coil in accordance with the embodiment of the present invention is mounted on the portable terminal. In addition, as an example of a terminal
   charging device in accordance with an embodiment of the present invention, a cradle capable of charging at least the above mobile phone unit is provided. Needless to say, any content described herein is only provided as an example and the present invention is thus not limited to such an example.

### [General configurations of cradle and mobile phone unit and their basic actions in charging]

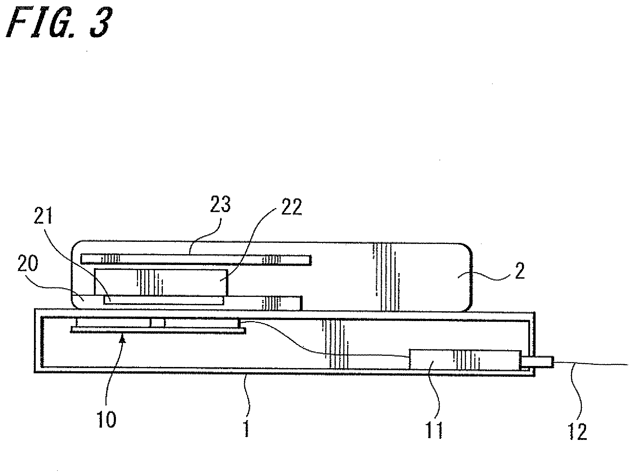

FIG. 3 is a diagram that schematically illustrates both the inner structure of principal parts of a cradle 1 and the inner structure of principal parts of a mobile phone unit 2.
The mobile phone unit 2 of the present embodiment includes a battery 22, a secondary power-transmission coil 21, a circuit board 23, and a housing in which these structural components are housed. Specifically, the battery 22 includes at least a rechargeable battery that generates power for operating the terminal. The secondary power-transmission coil 21 is provided as a noncontact power-transmission coil on the power-receiving side for charging the battery. Furthermore, various electronic circuits are mounted on the circuit board 23. The electronic circuits include a charging control circuit that charges the battery 22 by supplying the received power to the battery 22 through the secondary power-transmission coil 21. In the present embodiment, the illustration and the description of other structural components such as those commonly installed in any typical mobile phone unit are omitted.
The battery 22 is detachably mounted on the mobile phone unit 2. The mobile phone unit 2 is provided with a battery cover 20 to be closed and opened (or detached or attached) when the battery 22 is detached from or attached to the mobile phone unit 2.
The secondary power-transmission coil 21 is formed of a planar coil in which a linear conductor having electrical conductivity is spirally formed. One planar section of the secondary power-transmission coil 21 is affixed to the inner wall of the battery cover or on the outer surface of the battery 22 on the battery cover (20)'s side. The present embodiment will be described with respect to the case in which the secondary power-transmission coil 21 is affixed to the inner wall of the battery cover 20. The details of the configuration of the secondary power-transmission coil 21 will be described later.
On the other hand, the cradle 1 of the present embodiment includes a primary power-transmission coil 10, a control board 11, a power-supply cord 12, and a housing in which these structural components are housed. The primary power-transmission coil 10 is provided as a noncontact power-transmission coil on the power-transmission side for charging the battery 22 of the mobile phone unit 2. The control board 11 supplies power to the primary power-transmission coil 10 and controls the operation. In addition, the power-supply cord 12 is, for example, connected to a consumer power supply system. Illustration and description of other structural components provided with typical cradles are omitted herein.
Substantially similar to the case of the secondary power-transmission coil 21 of the mobile phone unit 2, the primary power-transmission coil 10 of the cradle 1 is a planar coil in which a linear conductor with electrical conductivity is spirally formed. One flat surface of the power-transmission coil 10 is stuck on the inner wall side of the terminal-mounting base of the cradle 1.
The mobile phone unit 2 is placed on the terminal mounting base of the cradle 1. Then, the secondary power-transmission coil 21 of the mobile phone unit 2 and the primary power-transmission coil 10 of the cradle 1 are positioned in proximity. Accordingly, the state of the magnetic field within the primary power-transmission coil 10 changes. The control board portion 11 monitors changes in the state of the magnetic field in the primary power-transmission coil 10 when the secondary transmission coil 21 is positioned in proximity, by intermittent driving or similar.
The charging control circuit of the mobile phone unit 2 according to the embodiment is allowed to detect a voltage change in response to a change in magnetic field of the secondary power-transmission coil 21. The change in magnetic field occurs when the mobile phone unit 2 is placed on the terminal-mounting base of the cradle 1 and the secondary power-transmission coil 21 of the mobile phone unit 2 is then closely arranged to the primary power-transmission coil 10 of the cradle 1. Furthermore, a change in magnetic field of the secondary power-transmission coil 21 is caused when the primary power-transmission coil 10 is closely arranged. When a voltage level due to such a change has reached a predetermined level, the charging control circuit of the mobile phone unit 2 then determines that the phone unit 2 is placed on the terminal-mounting base of the cradle 1.
Furthermore, in the present embodiment, both the cradle 1 and the mobile phone unit 2 are designed to be capable of transmitting information through the primary power-transmission coil 10 and the secondary power-transmission coil 21, respectively. For example, when the mobile phone unit 2 is placed on the terminal-mounting base of the cradle 1, they mutually detect a close arrangement of the primary coil 10 and the secondary power-transmission coil 21 on the basis of a change in magnetic field as described above. At this time, the cradle 1 and the mobile phone unit 2 exchange their identification information for authenticating the counterpart by transmitting the information through the primary power-transmission coil 10 and the secondary power-transmission coil 21, respectively.
Furthermore, according to the embodiment of the present invention, both the cradle 1 and the mobile phone unit 2 detect the close arrangement of the primary power-transmission coil 10 and the secondary power-transmission coil 21. Furthermore, when the cradle 1 and the mobile phone unit 2 authenticate each other, the cradle 1 is then allowed to transmit power to the mobile phone unit 2. Subsequently, the battery 22 of the mobile phone unit 2 is charged with the transmitted power.
In this way, when the charging of the battery 22 of the mobile phone unit 2 is started as described above, the control board 11 of the cradle 1 converts a consumer alternating voltage supplied through the power-supply cord 12 into a predetermined direct current voltage. An alternating voltage at a predetermined frequency is generated using the direct current voltage and the generated alternating voltage is then supplied to the primary power-transmission coil 10. On the other hand, when an alternating voltage is induced in the secondary power-transmission coil 21 with the alternating voltage from the primary power-transmission coil 10 of the cradle 1, the mobile phone unit 2 rectifies the induced alternating voltage and then converts it into a direct current voltage, followed by charging the battery 22 with the direct current voltage.
Furthermore, in the present embodiment, the control board 11 of the cradle 1 makes a determination under the following conditions. One side cannot authenticate the other side on the basis of the identification information thereof. Such a state may occur when a voltage level based on a change in electric field of the primary power-transmission coil 10 has not reach a predetermined voltage level. Such a state may also occur even when a voltage level based on a change in electric field of the primary power-transmission coil 10 has reached a predetermined voltage level. Consequently, the control board 11 of the cradle 1 determines that a change in magnetic field of the primary power-transmission coil 10 is generated when a metal substance, such as a coin, or any of other substances with electrical conductivities is placed on the terminal-mounting base. Then, the control board 11 takes control of terminating the supply of power to the primary power-transmission coil 10.
Furthermore, in the present embodiment, when the battery 22 of the mobile phone unit 2 is being charged by transferring power from the cradle 1, the transmission of charging information is carried out between the cradle 1 and the mobile phone unit 2 through the primary power-transmission coil 10 and the secondary power-transmission coil 21. In other words, the charging control circuit of mobile phone unit 2 transmits the charging information of the battery 22 of the mobile phone unit 2 to the cradle 1 when the battery 22 is being charged by the power transmission from the cradle 1. The control board 11 of the cradle 1 monitors the charging status of the battery 22 of the mobile phone unit 2 on the basis of the charging information transmitted from the unit 2. When the control board 11 grasps from the charging information the fact that the charging of the battery 22 has not been completed, the power transmission through the primary power-transmission coil 10 is carried on. In contrast, when the control board 11 grasps from the charging information the fact that the charging of the battery 22 has been completed, it carries out control of terminating the power transmission. In addition, for example, the control board 11 carries out control of terminating the power transmission if it receives the information about a certain abnormality from the mobile phone unit 2.

### [Details of noncontact power-transmission coil]

Hereinafter, the detailed configuration of the noncontact power-transmission coil in accordance with the embodiment of the present invention will be described. Here, in each of the embodiments as described below, the noncontact power-transmission coil (secondary power-transmission coil 21) mainly mounted on the mobile phone unit 2 will be exemplified. In addition, each figure as represented below will be provided for illustrating the schematic configuration of the noncontact power-transmission coil of each embodiment. The number of windings of the coil and the scale sizes, arrangements, and so on of the respective parts are different from those of an actual product. In other words, these matters are defined as required for facilitating the explanation of the present invention.

### [Details of noncontact power-transmission coil in which an electric wire is spirally wound]

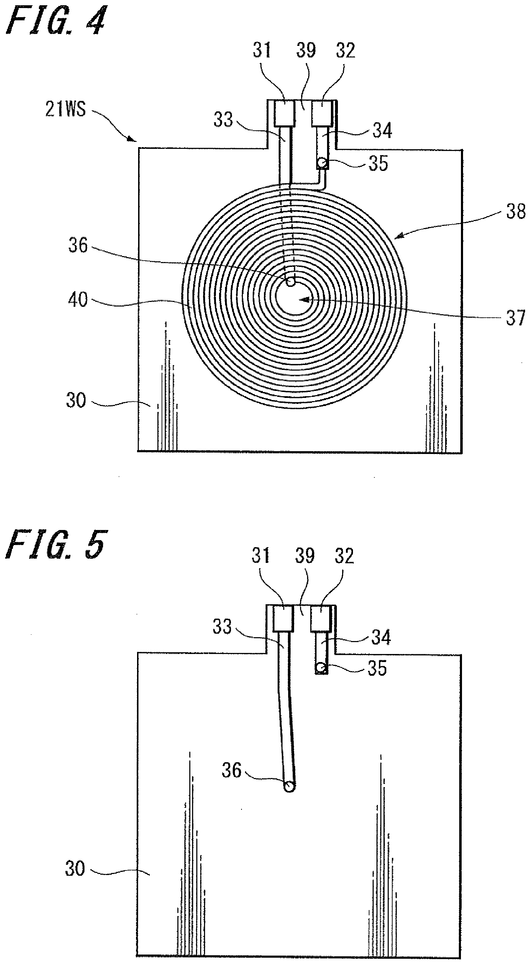

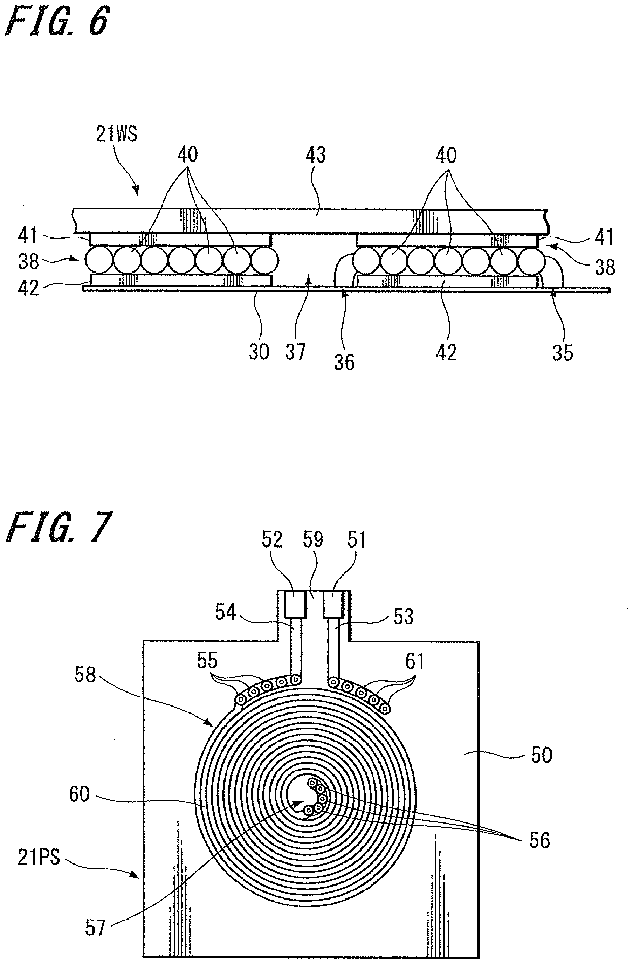

Referring to FIGS. 4 to 6, the schematic configuration of a noncontact power-transmission coil 21WS having a planar coil in which an electric wire 40 is spirally wound will be described. FIG. 4 is a schematic front view of the noncontact power-transmission coil 21WS in which a planar coil is mounted on a flexible printed-circuit board 30. FIG. 5 is a schematic front view of the flexible printed-circuit board 30 from which the planar coil is removed. In addition, FIG. 6 is a schematic cross sectional view of the noncontact power-transmission coil 21WS of the present example not forming part of the invention. As shown in FIGS. 4 to 6, the noncontact power-transmission coil 21WS of the present example includes the planar coil formed by spirally winding a single or twisted electric wire 40 coated with a surface-insulating layer on approximately the same plane. One flat surface side of the planar coil is stuck on the surface of the flexible printed-circuit board 30 through an adhesion sheet 42. In addition, the other flat surface side of the planar coil is stuck on a magnetic sheet 43 through an adhesion sheet 41 so that the magnetic sheet 43 can entirely cover the other flat surface side of the planar coil. The magnetic sheet 43 effectively forms magnetic paths for the planar coil and the noncontact power-transmission coil 10 of the cradle 1 to cause an increase in inter-linkage magnetic flux, while preventing undesired radiation of magnetic fields generated from both of the coils. The planar coil can be mounted on the flexible printed-circuit board 30 and stuck to the magnetic sheet 43 by adhesion with adhesion sheets 41, 43 as illustrated by an example shown in FIG. 6, respectively. Alternatively, for example, the mounting of the planar coil may be performed by inserting an adhesive resin in the planar coil or between the planar coil and the printed-circuit board 30, or the planar coil and the magnetic sheet 43. When the mounting is carried out by insertion of the resin as described above, there is no need of the adhesion sheet. It enables the thickness of the noncontact power-transmission coil to be reduced. Furthermore, though omitted from the figure, a metal sheet made of aluminum or the like may be stuck on the outside of the magnetic sheet 43 if needed. In addition, in contrast to the side the flexible printed-circuit board 30 on which the above-mentioned noncontact power-transmission coil 21WS of the flexible printed-circuit board 30 is stuck, the opposite side thereof is stuck on the inner wall surface of the battery cover 20 of the mobile phone unit 2 by an adhesion sheet not shown in the figure. The flexible printed-circuit board 30 is a substrate in the shape of a considerably thin sheet, for example, one using a polyimide resin as a base material. An insulating layer is formed on the surface of such a substrate. However, as shown in FIG. 4 and FIG. 5, when a planar coil is stuck on the flexible printed-circuit board 30 of the present example, any portion of the surface-insulating layer is not formed on a first coil contact portion 36 arranged in the inner peripheral portion 37 of the planar coil, a second coil contact portion 35 arranged in the outer peripheral portion 38 of the planar coil, and a first external connection terminal 31 and a second external connection terminal 32. Thus, an inner conductor of the flexible printed-circuit board can be exposed to the outside. In addition, the first coil contact portion 36 is electrically connected to the first external connection terminal portion 31 through a first inner conductor pattern 33 formed under the surface insulating layer. Similarly, the second coil contact portion 35 is electrically connected to the second external connection terminal portion 32 through a second inner conductor pattern 34 formed under the surface insulating layer. Subsequently, when the planar coil is stuck on the above flexible printed-circuit board 30, the first coil contact portion 36 is electrically connected to the electric-wire end of the inner peripheral portion 37 of the planer coil at the start of the winding. In contrast, the above second coil contact portion 35 is electrically connected to the electric-wire end of the outer peripheral portion 38 of the planar coil at the end of the winding. Furthermore, in the present example, as shown in FIG. 4 and FIG. 5, the flexible printed-circuit board 30 has substantially a rectangular shape with a projecting portion 39. Both the first external connection terminal portion 31 and the second external connection terminal portion 32 are arranged on the projecting portion 39. The present example is not limited to such a shape of the substrate. Furthermore, the substrate 30 on which the planar coil is mounted may be a thin-solid type printed-circuit board instead of the flexible printed-circuit board.
As described above, according to the noncontact power-transmission coil 21WA of the embodiment as shown in FIGS. 4 to 6, the electric-wire end of the planar coil at the start of the winding is electrically connected to the first coil contact portion 36 of the flexible printed-circuit board 30. In addition, the electric-wire end of the planar coil at the end of the winding is electrically connected to the second coil contact portion 35 of the flexible printed-circuit board 30. Furthermore, the first coil contact portion 36 is electrically connected to the first external connection terminal portion 31 through the first inner conductor pattern 33 of the flexible printed-circuit board 30. Likewise, the second coil contact portion 35 is electrically connected to the second external connection terminal portion 32 through the second inner conductor pattern 34 of the flexible printed-circuit board 30. As a result, there are no overlapping portions of the electric wire in contrast to one shown in FIGS. 1 to 2 as described above. Therefore, the thickness of the noncontact power-transmission coil 21WS can be reduced.

### [Details of noncontact power-transmission coil prepared with flexible printed-circuit board]

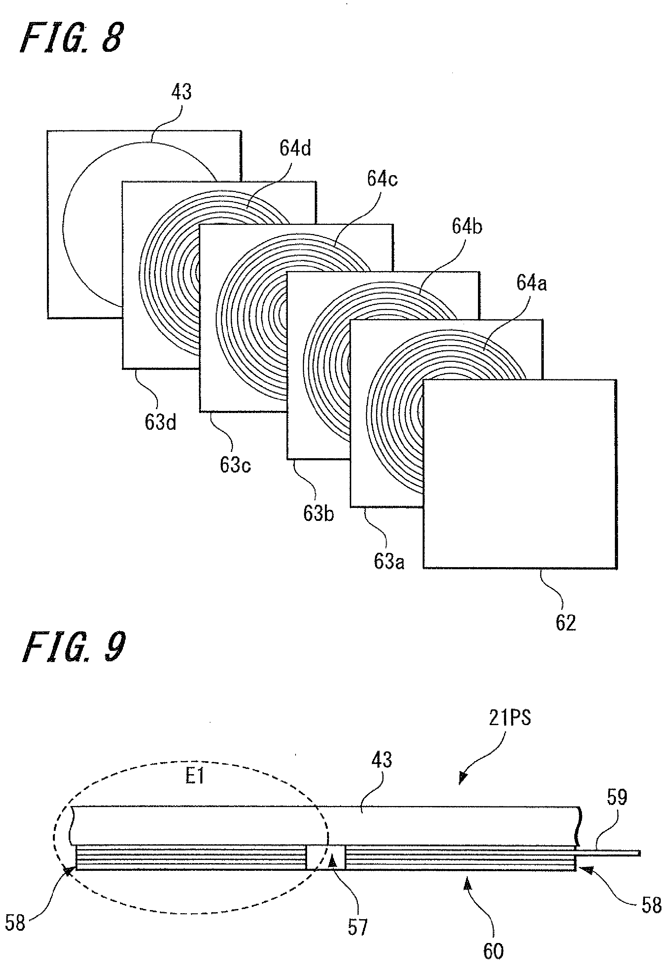

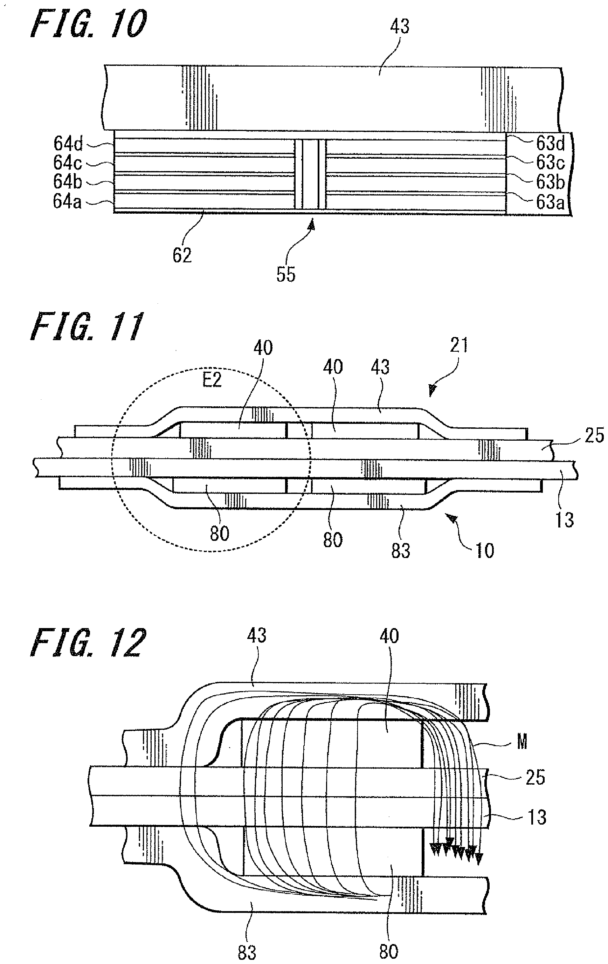

FIGS. 7 to 10 illustrate the schematic configuration of a noncontact power-transmission coil 21PS with a multi-layer structure in which multiple flexible printed-circuit boards each having a planar coil pattern, a spirally-formed conductor pattern, are stacked on top of one another. In other words, FIG. 7 is a schematic front view of the noncontact power-transmission coil 21PS with the multi-layered flexible printed-circuit board. FIG. 8 is a schematic perspective view in which the respective layers of the printed-circuit board are illustrated in separation from one another. FIG. 9 is a schematic cross sectional view of the noncontact power-transmission coil 21PS of the present embodiment with the multi-layered flexible printed-circuit board. FIG. 10 is an enlarged view of the portion enclosed with an ellipse E1 shown in FIG. 9.
As shown in FIGS. 7 to 10, the noncontact power-transmission coil 21PS of the present embodiment may be, for example, in the form of a four-layered structure including a first layer substrate 64a, a second layer substrate 64b, a third layer substrate 64c, and a fourth layer substrate 64d. Each of these substrates includes a sheet-shaped substrate made of a polyamide resin or the like as a base material on which a spirally-wound conductor line pattern 60 is formed. A surface insulating layer 62 is formed on the surface of the top layer, the first layer substrate 64a, and an adhesion layer and an interlayer insulating layer 63a are formed between the first layer substrate 64a and the second layer substrate 64b. Similarly, an adhesion layer and an interlayer insulating layer 63b are formed between the second layer substrate 64b and the third layer substrate 64c. In addition, an adhesion layer and an interlayer insulating layer 63c are formed between the third layer substrate 64c and the fourth layer substrate 64d. A magnetic sheet 43 is stuck on the back side of the bottom layer, the fourth layer substrate 64d, through the adhesion layer and the insulating layer 63d.
Furthermore, the ends of the respective conductive patterns 60 of the first to fourth layer substrates 64a to 64d, which are located at the inner peripheral portion 57, are electrically connected to one another through first through holes 56. Similarly, the ends of the respective conductive patterns 60 of the first to fourth layer substrates 64a to 64d, which are located at the outer peripheral portion 58, are electrically connected to one another through second through holes 55. Furthermore, the first through holes 56 for the conductor patterns of the respective layers, which are located at the inner peripheral portion 57, are electrically connected to the through holes 61 for the conductor patterns of the respective layers, which are located at the outer peripheral portion 58. Here, though not shown in the figure, a metal sheet, such as one made of aluminum, may be stuck on the outer side of the magnetic sheet 43 if required. In addition, the surface side of the surface insulating layer 62 is stuck on the inner wall side of the battery cover 20 of the mobile phone nit 2 through an adhesion sheet (not shown).
Furthermore, in the noncontact power-transmission coil 21PS of the present embodiment, for example, the second through hole 55 of the fourth layer substrate 64d is provided as a second coil contact portion in accordance with the embodiment of the present invention. Then, the second through hole 55 is electrically connected to the second external connection terminal portion 52 through the second inner conductor pattern 54. Similarly, the first through hole 56 of the fourth layer substrate 64d is provided as a first coil contact portion in accordance with the embodiment of the present invention. Then, the first through hole 56 is electrically connected to the first external connection terminal portion 51 through the above through hole 61 and the first inner conductor pattern 53. Furthermore, in this embodiment, as shown in FIG. 7 and FIG. 9, the flexible printed-circuit board of the multi-layer structure is substantially in the shape of a square having a protruded portion 59. The protruded portion 59 is provided with the first external connection terminal portion 51 and the second external connection terminal portion 52. However, according to an embodiment of the present invention, the substrate is not limited to one having such a shape.

As described above, the noncontact power-transmission coil 21PS of the embodiment as illustrated in FIGS. 7 to 10 which does form part of the invention is formed with the conductor patterns 60 on the multi-layered flexible printed-circuit board, where the planar coil is extremely thinner than an electric wire. In addition, the first through hole 56 connected to the pattern end (at the start of the winding) in the inner peripheral portion 57 of each conductor pattern 60 of the planar coil and the first external connection terminal portion 51 are electrically connected to each other through the through hole 61 and the first inner conductor pattern 53. Similarly, the second through hole 55 connected to the pattern end (at the end of the winding) of the peripheral portion 58 and the second external connection terminal portion 52 are electrically connected through the conductor pattern 54. As compared to FIGS. 1 to 2 described above, there are no overlapped portions of the electric wire in the noncontact power-transmission coil 21PS. Therefore, the thickness of the noncontact power-transmission coil 21PS can be extremely reduced. In particular, in the case of the noncontact power-transmission coil 21PS as shown in FIGS. 7 to 10, the planar coil is formed with the conductor pattern 60 of the flexible printed-circuit board. Thus, such a noncontact power-transmission coil 21PS can be thinner than one using the planar coil made of the electric wire as described above.

### [Description of interlinkage magnetic flux with planner coil and magnetic sheet]

Referring to FIGS. 11 to 16, the interlinkage magnetic flux, which can be changed depending on a method of sticking the magnetic sheet, will be described. In the following description, the noncontact power-transmission coil in which the electric wire is spirally wound as illustrated in FIGS. 4 to 6 is exemplified. However, the noncontact power-transmission coil may be the one in which the spirally-wound conductor pattern is formed on the multi-layered flexible printed-circuit board as illustrated in FIGS. 7 to 10.

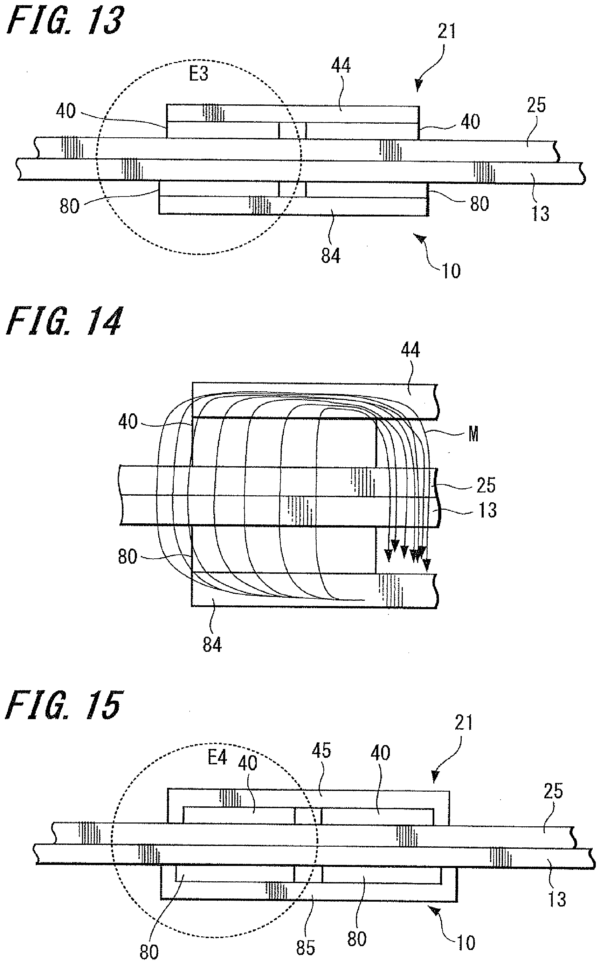

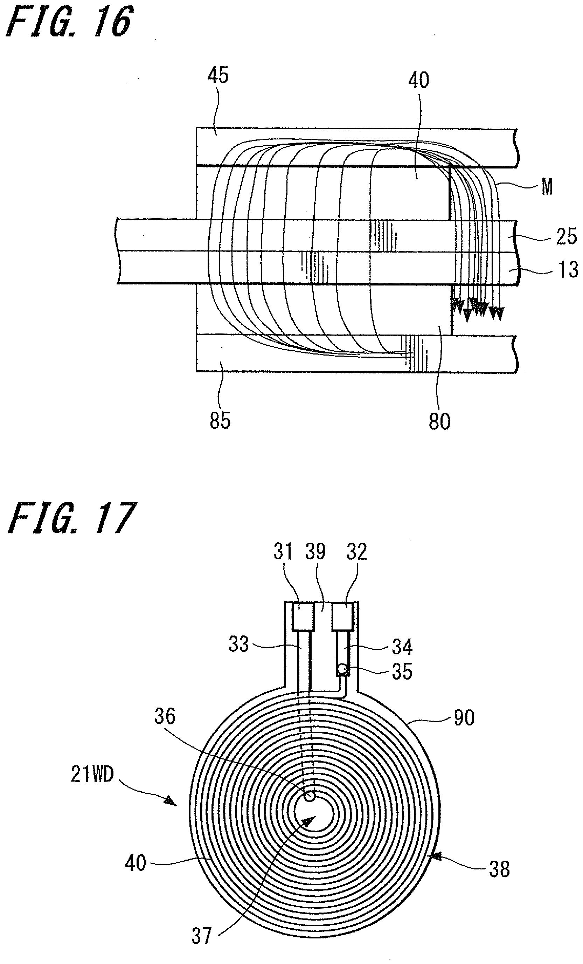

FIGS. 11, 13, and 15 are schematic cross sectional view of both the portion of the mobile phone unit 2 adjacent to the noncontact power-transmission coil 21 and the portion of the cradle 1 adjacent to the noncontact power-transmission coil 10 (adjacent to the terminal-mounting base). In this case, the noncontact power-transmission coil 21 is formed such that a magnetic sheet 43 or 44 or a magnetic layer 45 is formed on the flat surface of a planar coil made of a wound electric wire 40. The noncontact power-transmission coil 21 is stuck on the wall 25 of a battery cover 20. Likewise, the noncontact power-transmission coil 10 is formed such that a magnetic sheet 83 or 84 or a magnetic layer 85 is formed on the flat surface of a planar coil made of a wound electric wire 80. The noncontact power-transmission coil 10 is stuck on the housing wall 13 of the cradle 1. Furthermore, FIG. 12 is an enlarged view of the portion enclosed with an ellipse E2 shown in FIG. 11 and illustrates the flow of magnetic flux M formed by both the planar coil of the mobile phone unit 2 and the planar coil of the cradle 1. Likewise, FIG. 14 is an enlarged view of the portion enclosed with an ellipse E3 shown in FIG. 12 and illustrates the flow of magnetic flux M formed by both the planar coils. FIG. 16 is an enlarged view of the portion enclosed with an ellipse E4 shown in FIG. 15 and illustrates the flow of magnetic flux M formed by both the planar coils. Furthermore, in the example of FIGS. 12, 14, and 16, the magnetic flux M is directed in one direction for simplifying the illustration thereof. Since the alternating voltage is used at the time of actual power transmission, the direction of magnetic flux M is alternately reversed. Furthermore, in FIGS. 11 to 16, the illustration of the adhesion sheet is omitted.
The example illustrated in FIG. 11 and FIG. 12 represents as follows. The magnetic sheet 43 is stuck on the whole flat surface of the planar coil in the noncontact power-transmission coil 21 of the mobile phone unit 2. In addition, the magnetic sheet 83 is stuck on the whole flat surface of the planar coil of the noncontact power-transmission coil 10 of the cradle 1. The example illustrated in FIG. 13 and FIG. 14 represents that the magnetic sheets 44 and 84 with dimensions substantially fit to the shape of the surfaces of the respective planar coils are stuck thereon. The example illustrated in FIG. 15 and FIG. 16 represents that both the noncontact power-transmission coil 21 and the noncontact power-transmission coil 10 are provided with magnetic layers 45 and 85, respectively. The magnetic layers 45 and 85 are formed so that they fit to the shapes of the flat surfaces of the respective planar coils and substantially, tightly attached to the side portions of the respective planar coils.
In FIGS. 11 to 16, for example, the magnetic sheets 43 and 83 may be stuck on the whole flat surfaces of the respective planar coils as shown in FIG. 11 and FIG. 12. In this case, the magnetic sheets 43 and 83 are not tightly attached on the respective planar coils on the side portions thereof, thereby forming a certain degree of a gap. Thus, a decrease in interlinkage magnetic flux occurs as the magnetic pass steps away and is then formed insufficiently. Furthermore, as shown in FIG. 13 and FIG. 14, the magnetic sheets 44, 84 having dimensions substantially may fit to the shapes of the flat surfaces of the respective planar coils. The magnetic sheets 44, 84 may be stuck on the respective planer coils. In this case, the magnetic sheets are only present on the upper surface of the respective planar coil. Thus, the interlinkage magnetic flux decreases as the magnetic flux is not efficiently formed. On the other hand, as shown in FIG. 15 and 16, the magnetic layers 45, 85 may be formed so that their dimensions substantially fit to the shapes of the flat surfaces of the respective planar coils. In addition, the magnetic layers 45, 85 may be substantially tightly attached on the side portions of the respective coils. In this case, the magnetic layers 45, 85 are not only present on the upper surfaces of the respective planar coils but also present on the side portions of the respective planar coils. Thus, a magnetic path can be efficiently formed and a large amount of interlinkage magnetic flux can be formed. Therefore, it is desirable to form a magnetic layer for obtaining a large amount of the interlinkage magnetic flux by efficiently forming the magnetic path. That is, as shown in FIG. 15 and FIG. 16 it is desirable to form the magnetic layer not only substantially attached on the flat surface of each planer coil but also on the side portion thereof.

### [Details of noncontact power-transmission coil in which magnetic layer is also formed on outer periphery side portion of planar coil made of electric wire]

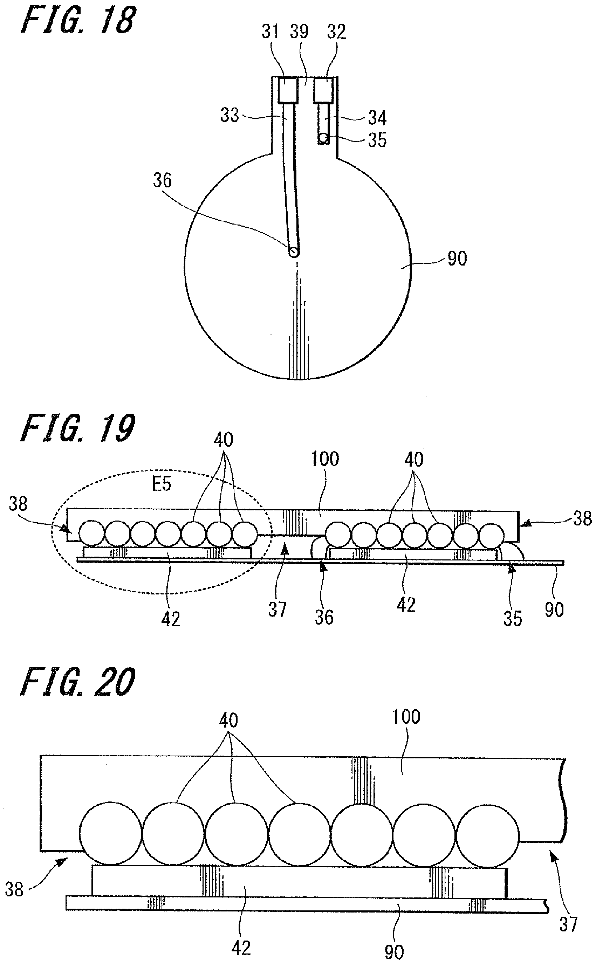

FIGS. 17 to 20 illustrate the schematic configuration of a noncontact power-transmission coil 21WD of an example not forming part of the present invention. In this case, a magnetic layer 100 is formed on both the flat surface and the side portion of the planar coil formed of a spirally-wound electric wire 40. In other words, FIG. 17 is a schematic front view of a flexible printed-circuit board 90 on which the planar coil of the electric wire 40 is stuck. FIG. 18 is a schematic front view of a flexible printed-circuit board 90 without the planar coil. FIG. 19 is a schematic cross sectional view of the noncontact power-transmission coil 21WD. FIG. 20 is an enlarged view of the portion enclosed with an ellipse E5 shown in FIG. 17. Referring to FIGS. 17 to 20, the noncontact power-transmission coil 21WD of the present example is formed as follows. One flat surface of the planar coil formed of the wound electric wire 40 is stuck on the surface of the flexible printed-circuit board 90 through an adhesion sheet 42. Further, a magnetic layer 100 is formed on the other flat surface and the side portion of the planar coil. The magnetic layer 100 may be a magnetic sheet being stuck on both the other flat surface and the side portion or may be a magnetic solution containing ferrite powder or the like as the material thereof. Furthermore, though not shown in the figures, a metal sheet made of aluminum or the like may be stuck on the outside of the magnetic layer 100 if required. In addition, one side of the flexible printed-circuit board 90, which is opposite to the side thereof on which the above noncontact power-transmission coil 21WD is stuck, is stuck on the internal surface of the battery cover 20 of the mobile phone unit 2 through an adhesion sheet (not shown).
The flexible printed-circuit board 90 is a substrate in the form of an extremely thin sheet containing a polyimide resin or the like as a base material. The surface of the flexible printed-circuit board 90 is provided with an insulating layer and formed so as to substantially fit to the shape of the flat surface of the planar coil. Furthermore, this flexible printed-circuit board 90 of the present example is configured as follows in a manner similar to the above case shown in FIG. 4 and FIG. 5. That is, a surface insulating layer is not formed on any of the first coil contact portion 36 arranged in the inner peripheral portion 37 of the planar coil, the second coil contact portion 35 arranged near the outside of the outer peripheral portion 38 of the planar coil, the first external connection terminal portion 31, and the second external connection terminal portion 32. Thus, the inner conductor of the flexible printed-circuit board 90 is exposed to the outside. Furthermore, the first coil contact portion 36 is electrically connected to the first external connection terminal portion 31 through the first inner conductor pattern 33 formed under the surface insulating layer. In addition, the second coil contact portion 35 is electrically connected to the second external connection terminal portion 32 through the second inner conductor pattern 34 formed under the surface insulating layer. Furthermore, when the planar coil is stuck on the above flexible printed-circuit board 90, the first coil contact portion 36 is electrically connected to the electric wire end at the start of the winding of inner peripheral portion 37 of the planar coil. The second coil contact portion 35 is electrically connected to the electric wire end at the end of the winding of the outer peripheral portion 38 of the planar coil. Furthermore, as shown in FIG. 17 and FIG. 18, the flexible printed-circuit board 90 of this example has a protruded portion 39 on which the first external connection terminal portion 31 and the second external connection terminal portion 32 are mounted. However, the shape of the extruded portion 39 is not limited to the example shown in FIG. 17 and FIG. 18.
As described above, in the case of the noncontact power-transmission coil 21WD shown in FIGS. 17 to 20, the first coil contact portion 36 is electrically connected to the first external connection terminal portion 31 through the first inner conductor pattern 33 of the flexible printed-circuit board 90. The second coil contact portion 35 is electrically connected to the second external connection terminal portion 32 through the second inner conductor pattern 34 of the flexible printed-circuit board. Therefore, the thickness of the noncontact power-transmission coil 21WD may be extremely reduced.

In addition, in the case of the noncontact power-transmission coil 21WD shown in FIGS. 17 to 20, the magnetic layer 100 is formed so as to substantially fit to the shape of the flat surface of the planar coil and substantially, tightly attach to the side portion thereof. Thus, at the time of charging the mobile phone unit 2, a magnetic pass can be efficiently formed between the planar coil of the noncontact power-transmission coil 21WD and the noncontact power-transmission coil of the cradle 1. As a result, a large amount of interlinkage magnetic flux can be formed, thereby allowing power to be efficiently transmitted. In particular, in the case of forming the magnetic layer by the application, the number of production steps may be reduced and handling can be simplified.

### [Details of noncontact power-transmission coil where magnetic layer is also formed on the periphery side portion of planar coil formed on flexible printed-circuit board]

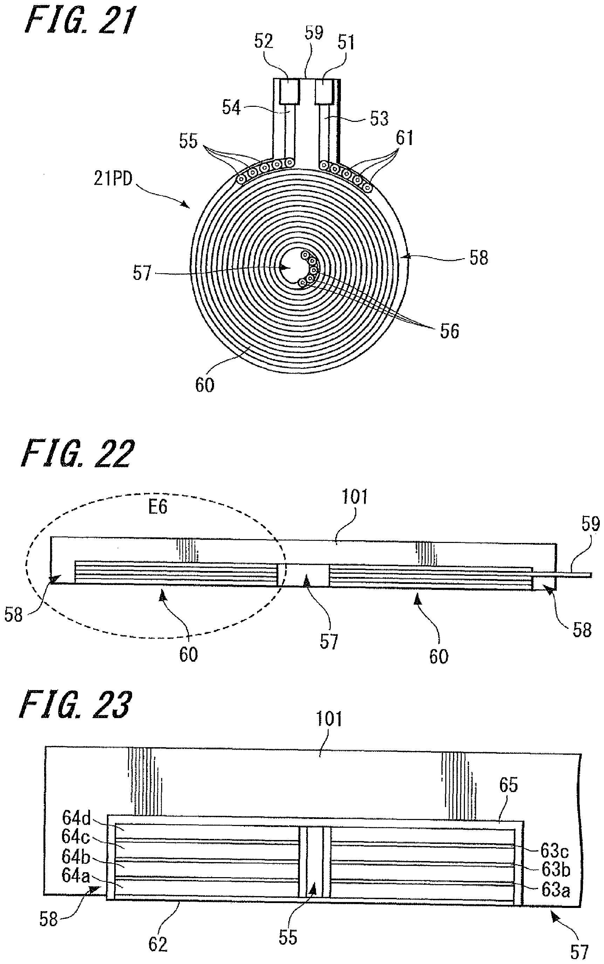

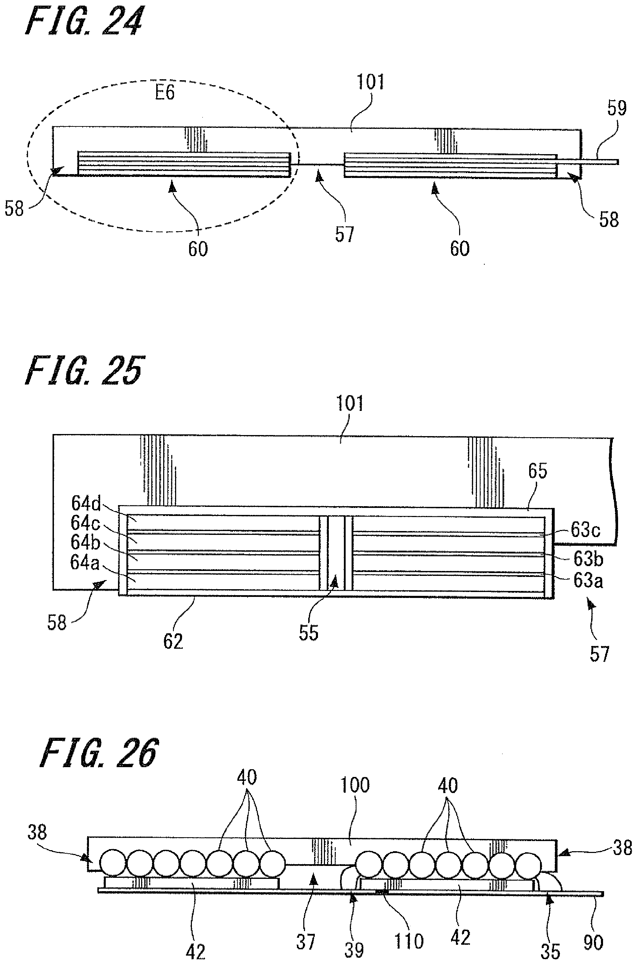

FIGS. 21 to 23 illustrate the schematic configuration of a noncontact power-transmission coil 21PD of the present embodiment forming part of the invention. In this case, a magnetic layer 101 is formed on the planar coil pattern of a multi-layered flexible printed-circuit board and both the flat surface and the side portion of a spirally-formed conductor pattern, respectively. In other words, FIG. 21 illustrates the schematic configuration of the noncontact power-transmission coil 21PD in multi-layer structure laminated with a flexible printed-circuit board having a planar coil pattern. FIG. 22 is a cross sectional view of such an exemplified noncontact power-transmission coil 21PD. FIG. 23 is an enlarged view of the portion enclosed with an ellipse E6 shown in FIG. 22.
In FIGS. 21 to 23, the noncontact power-transmission coil 21PD of the present embodiment includes a multi-layered flexible printed-circuit board with the shape substantially fitting to the flat surface of a planar coil pattern formed of a spirally-wound conductor pattern 60. The multi-layered flexible printed-circuit board is constructed in a manner similar to the example shown in FIG. 7 as described above. That is, it includes a first layer substrate 64a, a second layer substrate 64b, a third layer substrate 64c, and a fourth layer substrate 64d. For instance, each of the substrates is prepared so that the spirally-wound conductor pattern 60 is formed on a sheet-shaped substrate made of a polyimide resin or the like as a base material. A surface insulating layer 62 is formed on the surface of the first layer substrate 64a. Both an adhesion layer and an interlayer insulating layer 63a are formed between the first layer substrate 64a and the second layer substrate 64b. In addition, both an adhesion layer and an interlayer insulating layer 63b are formed between the second layer substrate 64b and the third layer substrate 64c. Furthermore, both an adhesion layer and an interlayer insulating layer 63c are formed between the third layer substrate 64c and the fourth layer substrate 64d. In this example, furthermore, at least an insulating layer 65 is formed on both the back side of the bottom layer, the fourth layer substrate 64d, and the periphery side portion of the multi-layered flexible printed-circuit board. Besides, the magnetic layer 101 is formed on the outer side of the insulating layer 65 by sticking a magnetic sheet or applying a magnetic solution thereon. Although not shown in the figures, a metal sheet made of aluminum or the like may be stuck on the outer side of the magnetic layer 101 if required. In addition, one side of the multi-layered flexible printed-circuit board, which is opposite to the side thereof on which the magnetic layer is formed, is stuck on the internal surface of the battery cover 20 of the mobile phone unit 2 through an adhesion sheet (not shown). Furthermore, in the exemplified noncontact power-transmission coil 21PD, similar to the case with the example shown in FIG. 7 as described above, the pattern ends (at the start of the winding) of the inner peripheral portions 57 of the respective conductor patterns 60 of the first to fourth layer substrates 64a to 64d are electrically connected to one another through the first through holes 56, respectively. The pattern ends (at the end of the winding) of the outer peripheral portions 58 of the respective conductor patterns 60 of the first to fourth layer substrates 64a to 64d are electrically connected to one another via the second through holes 55, respectively. The first through holes 56 formed in the inner peripheral portions 57 of the conductor patterns 60 of the respective layers are electrically connected to the through holes 61 formed in the outer peripheral portions 58 of the conductor patterns 60 of the respective layers. Furthermore, in the noncontact power-transmission coil 21PD, for example, the second through hole 55 of the fourth layer substrate 64d is electrically connected to the second external connection terminal portion 52 through the second inner conductor pattern 54. The first through hole 56 of the fourth layer substrate 64d is electrically connected to the first external connection terminal portion 51 through both the through hole 61 and the first inner conductor pattern 53. In this embodiment, as shown in FIG. 21, the multi-layered flexible printed-circuit board has a protruded portion 59. The protruded portion 59 is provided with the first external connection terminal portion 51 and the second external connection terminal portion 52. However, according to an embodiment of the present invention, the shape of the protruded portion 59 is not limited to the example illustrated in FIG. 21. As described above, the noncontact power-transmission coil 21PD of the embodiment illustrated in FIGS. 21 to 23, similar to the case with the example shown in FIG. 7 as described above, the conductor pattern 60 on the multi-layered flexible printed-circuit board with a thickness extremely smaller than that of the electric wire forms the planer coil. In addition, the pattern end of the inner peripheral portion 57 of the conductor pattern 60 is connected to the first external connection terminal portion 51 through the first through hole 56 and the through hole 61 and also through the first inner conductor pattern 53. Similarly, the pattern end of the outer peripheral portion 58 of the conductor pattern 60 is connected to the second external connection terminal portion 52 through the second through hole 55 and the second inner conductor pattern 54. Thus, the thickness of the noncontact power-transmission coil 21PD can be extremely reduced.
Furthermore, the noncontact power-transmission coil 21PD illustrated in FIGS. 21 to 23 includes the magnetic layer 101 which is formed so as to substantially fit to the shape of the flat surface of the planner coil pattern and substantially, tightly attach to the side portion of the planner coil. Thus, at the time of charging the mobile phone unit 2, a magnetic pass can be efficiently formed between the planar coil and the noncontact power-transmission coil of the cradle 1. As a result, a large amount of interlinkage magnetic flux can be formed, thereby allowing power to be efficiently transmitted.
In the example illustrated in FIG. 22 and FIG. 23 as described above, in the noncontact power-transmission coil 21PD, the inner peripheral portion 57 of the planner coil pattern (conductor pattern 60) has a hole formed in the multi-layered flexible printed-circuit board. The diameter of the hole is slightly smaller than that of the inner peripheral portion 57. The magnetic layer is formed so that the inside of the hole can be completely filled therewith. Alternatively, as shown in FIG. 24 and FIG. 25, for example, the magnetic layer formed in the hole may fill up to a part of the hole in the thickness direction of the multi-layered flexible printed-circuit board. However, if the magnetic flux should be concentrated, it is preferable that the magnetic layer fills the hole as much as the whole thickness of the multi-layered flexible printed-circuit board as in the case of the example shown in FIG. 22 and FIG. 23.

### [Example of mounting temperature-detecting element]

As in the case of the present embodiment, a noncontact power-transmission coil may be used and an electromagnetic induction is then applied to carry out a power transmission from the cradle 1 to the mobile phone unit 2. In this case, an eddy current may be caused in a foreign metal substance. For example, it may be caused when any foreign metal substance, such as a coin, is placed on the terminal-mounting base of the above cradle 1. In other words, it may be caused when the foreign metal substance is present at a position near the noncontact power-transmission coil 10 of the cradle 1.
Typically, in this case, a temperature-detecting device is attached near the noncontact power-transmission coil. When the temperature-detecting device detects an abnormal eddy current, the supply of power to the noncontact power-transmission coil is controlled to be stopped.
However, when the temperature-detecting device is attached near the noncontact power-transmission coil, the thickness of a member for attaching the temperature-detecting device should be considered in addition to the thickness of the temperature-detecting device. Thus, these thicknesses prevent the noncontact power-transmission coil portion from reduction in thickness.
Consequently, in the present embodiment, as shown in FIGS. 26 to 28, the temperature-detecting element layer 110 for preventing the noncontact power-transmission coil from generating abnormal heat is directly formed in the conductor pattern on the flexible printed-circuit board. In addition, the wiring pattern from the temperature-detecting element layer 110 is also formed in the flexible printed-circuit board. Furthermore, the noncontact power-transmission coil in which the temperature-detecting element layer 110 is formed as shown in FIGS. 24 to 26 is mounted on the power-transmission side, the coil of the cradle 1. Alternatively, needless to say, such a noncontact power-transmission coil may be applied on the coil of the mobile phone unit 2.
FIG. 26 and FIG. 27 illustrate the schematic configuration of a noncontact power-transmission coil having a planer coil formed of a wound electric wire 40 as described above, where a temperature-detecting element layer 110 is directly formed in a conductor pattern of a flexible printed-circuit board 90. In other words, FIG. 26 is a schematic cross sectional view of the noncontact power-transmission coil of this example. FIG. 27 is a schematic front view of the flexible printed-circuit board 90 where the planar coil is not stuck.
In FIG. 26 and FIG. 27, the temperature-detecting element layer 110 is formed in the conductor pattern of the flexible printed-circuit board 90. In this example, furthermore, the flexible printed-circuit board 90 is provided with a third external connection terminal portion 111 and a fourth external connection terminal portion 112 for taking temperature-detecting signals out of the above temperature-detecting element layer 110. In other words, wiring patterns are formed between the third external connection terminal portion 111, the fourth external connection terminal portion 112, and the above temperature-detecting element layer 110.

Furthermore, FIG. 28 illustrates the schematic configuration of a multi-layered flexible printed-circuit board forming part of the invention having a planar coil formed of a conductor pattern 60 as described above in FIGS. 21 to 23. In this case, for example, a temperature-detecting element layer 110 is directly formed in a conductor pattern of a first layer substrate 64a. Here, FIG. 28 is a schematic enlarged view of a portion where the temperature-detecting element layer 110 is formed in the schematic cross section of the noncontact power-transmission coil.

In FIG. 28, for example, the temperature-detecting element layer 110 is directly formed in a conductor pattern of a first layer substrate 64a. Although not shown in the figure, in this example, the wiring patterns through which the temperature-detecting signals are transmitted from the above temperature-detecting element layer 110 are connected to the third external connection terminal portion 111 and the fourth external connection terminal portion 112 via through holes, respectively, similarly to the case of FIG. 27.

As described above, in the noncontact power-transmission coil as shown in FIGS. 26 to 28, the temperature-detecting element layer 110 is directly formed in the conductor pattern on the flexible printed-circuit board. Therefore, the noncontact power-transmission coil may be prevented from being thick.
Furthermore, in the case of the noncontact power-transmission coil, the temperature-detecting element layer 110 is provided in the flexible printed-circuit board on the side where both coils, on which power transmission occurs using electromagnetic induction, face to each other. In other words, when abnormal overheating occurs due to the presence of the above described foreign metal substance or the like, the layer 110 is formed in the flexible printed-circuit board on the side nearest to the foreign metal substance. Thus, the generation of abnormal overheating can be immediately detected.
Note that, in the above example, the noncontact power-transmission coil having one temperature-detecting element layer 110 is exemplified. Alternatively, it may be provided with two or more temperature-detecting element layers. In this case, it is noted that the noncontact power-transmission coil does not thicken even if two or more temperature-detecting elements exist. The embodiments as described above are an example of the present invention, so that the present invention will not be restricted to any of the above embodiments. For this reason, a person skilled in the art will appreciate that the present invention can be modified in various ways depending on designs and others as far as it is within the scope of the gist of the present invention.
In the above embodiment, the mobile phone unit 2 has been exemplified to describe a reduction in thickness of the noncontact power-transmission coil. Alternatively, the present invention may be applied on the cradle 1. Furthermore, in the present embodiment, the noncontact power-transmission coil only has functions on the power-transmission side or functions on the power-receiving side. Alternatively, the present invention may be applied on a noncontact power-transmission coil having functions on both the power-transmission side and the power-receiving side.
Furthermore, in the present embodiment, the combination of the mobile phone unit 2 and the cradle 1 has been exemplified. However, the present invention is not restricted to such a combination. For instance, the present invention can be applied on any combination of various portable terminals, such as personal digital assistants (PDAs) and their respective cradles and also applied on planar coils used in noncontact IC cards and the corresponding reader/ writers, and so on.

It should be understood by those skilled in the art that various modifications, combinations, sub-combinations, and alterations may occur, depending on design requirements and other factors, insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A noncontact power-transmission coil arrangement, comprising:
a plurality of flexible printed-circuit boards (64a-64d) forming a multilayer structure, the multilayer structure including an adhesion layer and an insulating layer (63a-63d) sandwiched between respective printed-circuit boards in the structure, wherein on each flexible printed circuit board (64a-64d) is provided a planar coil formed by a spirally-wound conductor line pattern (60), wherein the ends of the respective conductor patterns (60) of each of the plurality of flexible printed circuit boards, which are located at the inner peripheral portion (57) of the respective conductor patterns, are electrically connected to one another through first through holes (56), wherein the ends of the respective conductor patterns (60) of each of the plurality of flexible printed circuit boards which are located at the outer peripheral portion (58) of the respective conductor patterns are electrically connected to one another through second through holes (55), wherein the respective first through holes (56) are electrically connected to further through holes (61) which are located at the outer peripheral portion (58) of the respective conductor patterns, wherein one of the outer flexible printed circuit boards (64d) in the multilayered structure, the second through hole (55) is provided as a second coil contact portion, and is electrically connected to a second external connection terminal portion (52) through a second inner conductor pattern (54), and on the same one of the outer flexible printed circuit boards (64d), the first through hole (56) is provided as a first coil contact portion, and is electrically connected to a first external connection terminal portion (51) through the further through hole (61) and a first inner conductor pattern (53), wherein on the same one of the outer flexible printed circuit boards (64d), a magnetic sheet (101) is stuck onto the back-side of the flexible printed circuit board (64d);
wherein the inner peripheral portion (57) of the planar coil pattern has a hole for the magnetic sheet formed in the multilayered structure, with the diameter of the hole being smaller than that of the said inner peripheral portion (57) of the planar coil pattern, and the magnetic sheet (101) is formed so that the inside of the said hole for the magnetic sheet is completely filled with magnetic sheet (101).

2. An arrangement according to claim 1, wherein each of said printed circuit boards (64a, 64d) includes a substrate layer made of a polyamide resin.

3. An arrangement according to claim 1, comprising a metal sheet stuck on the outer side of the magnetic sheet (101).

4. A portable terminal comprising means configured to receive a rechargeable battery (22), a non-contact power transmission coil arrangement according to any of the preceding claims and a charging control circuit executing control to charge the rechargeable battery with the power received through the non-contact power transmission coil.

5. A portable terminal according to claim 4, wherein the exposed side of the other outer printed circuit board (64a) is coated with an insulating material (62) and the coated side of the outer printed circuit board is adhered to an inner wall of a cover (20) for the rechargeable battery.

6. A terminal charging device comprising a terminal mounting base suitable for receiving a portable terminal including a rechargeable battery; a non-contact power transmission coil according to any one of claims 1 to 3 using electromagnetic induction with a coil installed in the predetermined portable terminal to charge the rechargeable battery of the portable terminal in a non-contact manner; and a power supply control unit for controlling power supply to the non-contact power-transmission coil.

## Patentansprüche

1. Kontaktlose Leistungsübertragungs-Spulenanordnung, die Folgendes umfasst:
mehrere biegsame gedruckte Leiterplatten (64a-64d), die eine Mehrschichtstruktur bilden, wobei die Mehrschichtstruktur eine Haftschicht und eine Isolierschicht (63a-63d) enthält, die in der Struktur zwischen jeweiligen gedruckten Leiterplatten eingefügt sind, wobei auf jeder biegsamen gedruckten Leiterplatte (64a-64d) eine ebene Spule vorgesehen ist, die durch ein spiralförmig gewundenes Leitungsmuster (60) gebildet ist, wobei die Enden der jeweiligen Leitermuster (60) von jeder der mehreren biegsamen gedruckten Leiterplatten, die sich an dem inneren Umfangsabschnitt (57) der jeweiligen Leitermuster befinden, mit einem weiteren durch erste Durchgangslöcher (56) elektrisch verbunden sind, wobei die Enden der jeweiligen Leitermuster (60) von jeder der mehreren biegsamen gedruckten Leiterplatten, die sich an dem äußeren Umfangsabschnitt (58) der jeweiligen Leitermuster befinden, mit einem weiteren durch zweite Durchgangslöcher (55) elektrisch verbunden sind, wobei die jeweiligen ersten Durchgangslöcher (56) mit weiteren Durchgangslöchern (61), die sich an dem äußeren Umfangsabschnitt (58) der jeweiligen Leitermuster befinden, elektrisch verbunden sind, wobei einer der äußeren biegsamen gedruckten Leiterplatten (64d) in der Mehrschichtstruktur das zweite Durchgangsloch (55) als ein zweiter Spulenkontaktabschnitt vorgesehen ist und durch ein zweites inneres Leitermuster (54) mit einem zweiten externen Verbindungsanschlussabschnitt (52) elektrisch verbunden ist und auf derselben der äußeren biegsamen gedruckten Leiterplatten (64d) das erste Durchgangsloch (56) als ein erster Spulenkontaktabschnitt vorgesehen ist und durch das weitere Durchgangsloch (61) und ein erstes inneres Leitermuster (53) mit einem ersten externen Verbindungsanschlussabschnitt (51) elektrisch verbunden ist, wobei auf derselben der äußeren biegsamen gedruckten Leiterplatten (64d) eine magnetische Lage (101) auf die Rückseite der biegsamen gedruckten Leiterplatte (64d) geklebt ist;
wobei der innere Umfangsabschnitt (57) des ebenen Spulenmusters ein Loch für die magnetische Lage aufweist, die in der Mehrschichtstruktur gebildet ist, wobei der Durchmesser des Lochs kleiner ist als der des inneren Umfangsabschnitts (57) des ebenen Spulenmusters und die magnetische Lage (101) so gebildet ist, dass die Innenseite des Lochs für die magnetische Lage vollständig mit der magnetischen Lage (101) gefüllt ist.

2. Anordnung nach Anspruch 1, wobei jede der gedruckten Leiterplatten (64a, 64d) eine Substratschicht enthält, die aus einem Polyamidharz hergestellt ist.

3. Anordnung nach Anspruch 1, die eine Metalllage umfasst, die auf die äußere Seite der magnetischen Lage (101) geklebt ist.

4. Tragbares Endgerät, das Mittel umfasst, die konfiguriert sind, eine wiederaufladbare Batterie (22), eine kontaktlose Leistungsübertragungs-Spulenanordnung nach einem der vorhergehenden Ansprüche und eine Ladesteuerungsschaltung, die eine Steuerung ausführt, um die wieder aufladbare Batterie mit der Leistung zu laden, die durch die kontaktlose Leistungsübertragungsspule empfangen wird, aufzunehmen.

5. Tragbares Endgerät nach Anspruch 4, wobei die freigelegte Seite der anderen äußeren gedruckten Leiterplatte (64a) mit einem Isoliermaterial (62) beschichtet ist und die beschichtete Seite der äußeren gedruckten Leiterplatte an eine Innenwand einer Abdeckung (20) für die wiederaufladbare Batterie geklebt ist.

6. Endgerätladungsvorrichtung, die eine Endgerätgrundplatte, die geeignet ist, ein tragbares Endgerät aufzunehmen, das eine wiederaufladbare Batterie enthält; eine kontaktlose Leistungsübertragungsspule nach einem der Ansprüche 1 bis 3, die elektromagnetische Induktion mit einer Spule, die in dem vorbestimmten tragbaren Endgerät installiert, verwendet, um die wiederaufladbare Batterie des tragbaren Endgeräts kontaktlos zu laden, und eine Leistungsversorgungssteuereinheit zum Steuern der Leistungsversorgung für die kontaktlose Leistungsübertragungsspule umfasst.

## Revendications

1. Agencement de bobine de transmission de puissance sans contact, comprenant :
une pluralité de cartes de circuit imprimé flexibles (64a à 64d) formant une structure multicouche, la structure multicouche incluant une couche d'adhérence et une couche isolante (63a à 63d) prises en sandwich entre des cartes de circuit imprimé respectives dans la structure, dans lequel sur chaque carte de circuit imprimé flexible (64a à 64d) est ménagée une bobine plane formée par un motif de ligne conducteur enroulé en spirale (60), dans lequel les extrémités des motifs conducteurs (60) respectifs de chacune de la pluralité de cartes de circuit imprimé flexibles, qui sont situées au niveau de la portion périphérique interne (57) des motifs conducteurs respectifs, sont électriquement connectées les unes aux autres par l'intermédiaire de premiers trous traversants (56), dans lequel les extrémités des motifs conducteurs (60) respectifs de chacun de la pluralité de cartes de circuit imprimé flexibles qui sont situées au niveau de la portion périphérique externe (58) des motifs conducteurs respectifs sont électriquement connectées les unes aux autres par l'intermédiaire de seconds trous traversants (55), dans lequel les premiers trous traversants (56) respectifs sont électriquement connectés à des trous traversants supplémentaires (61) qui sont situés au niveau de la portion périphérique externe (58) des motifs conducteurs respectifs, dans lequel l'une des cartes de circuit imprimé flexibles externes (64d) dans la structure multicouche, le second trou traversant (55) est ménagé comme une seconde portion de contact avec la bobine, et est électriquement connecté à une seconde portion de borne de connexion externe (52) par l'intermédiaire d'un second motif conducteur interne (54), et sur la même des cartes de circuit imprimé flexibles externes (64d), le premier trou traversant (56) est ménagé comme une première portion de contact avec la bobine, et est électriquement connecté à une première portion de borne de connexion externe (51) par l'intermédiaire du trou traversant supplémentaire (61) et un premier motif conducteur interne (53), dans lequel sur la même des cartes de circuit imprimé flexibles externes (64d), une feuille magnétique (101) est collée sur la face de dos de la carte de circuit imprimé flexible (64d) ;
dans lequel la portion périphérique interne (57) du motif de bobine plan comporte un trou pour la feuille magnétique formée dans la structure multicouche, le diamètre du trou étant plus petit que celui de ladite portion périphérique interne (57) du motif de bobine plan, et la feuille magnétique (101) est formée pour que l'intérieur dudit trou pour la feuille magnétique soit complètement rempli de la feuille magnétique (101).

2. Agencement selon la revendication 1, dans lequel chacune des cartes de circuit imprimé (64a, 64d) inclut une couche de substrat constituée d'une résine de polyamide.

3. Agencement selon la revendication 1, comprenant une feuille de métal collée sur le côté externe de la feuille magnétique (101).

4. Terminal portable comprenant des moyens configurés pour recevoir une batterie rechargeable (22), un agencement de bobine de transmission de puissance sans contact selon l'une quelconque des revendications précédentes et un circuit de commande de charge exécutant une commande pour charger la batterie rechargeable avec la puissance reçue par l'intermédiaire de la bobine de transmission de puissance sans contact.

5. Terminal portable selon la revendication 4, dans lequel le côté exposé de l'autre carte de circuit imprimé externe (64a) est revêtu d'un matériau isolant (62) et le côté revêtu de la carte de circuit imprimé externe est mis à adhérer à une paroi interne d'un cache (20) destiné à la batterie rechargeable.

6. Dispositif de charge de terminal comprenant une base de montage de terminal adéquate pour recevoir un terminal portable incluant une batterie rechargeable ; une bobine de transmission de puissance sans contact selon l'une quelconque des revendications 1 à 3 utilisant une induction électromagnétique avec une bobine installée dans le terminal portable prédéterminé pour charger la batterie rechargeable du terminal portable de manière sans contact ; et une unité de commande d'alimentation pour commander l'alimentation de la bobine de transmission de puissance sans contact.
